# EUROPEAN PATENT APPLICATION

(11) **EP 1 470 948 A1**
(43) Date of publication of application: **27.10.2004**
(21) Application number: 03405281.1
(22) Date of filing: 22.04.2003
(51) Int. Cl.: B60L 9/08

(54) **Traction transformer and method for monitoring an operating status of a traction transformer**

(71) Applicant: ABB Sécheron SA, 1211 Genève (CH)
(72) Inventor: Noisette, Philippe, c/o ABB Sécheron, 1211 Genève 2 (CH)
(74) Representative: ABB Patent Attorneys

(57) **Abstract**

The present invention is concerned with a traction transformer with an interface unit (5) comprising dedicated processor means (50) for monitoring an operating status of the transformer without unduly transmitting data to a train control system. Operating parameters such as a temperature of a cooling liquid (T_{liq}), an electrical power transformed (Pₑₗ), an ambient temperature or a level of the cooling liquid are measured by sensors (70, 71) and transmitted to the processor means (50). A present or future operating status is deduced from said parameters and operating conditions (increase in cooling effort, reduction of the load) are controlled in response thereto.

## Description

### FIELD OF THE INVENTION

The invention relates to the field of traction transformers for electric railway vehicles. It refers to a traction transformer and a method for monitoring an operating status of a traction transformer as described in the preamble of claim 1 and 6, respectively.

### BACKGROUND OF THE INVENTION

In electric railway propulsion vehicles such as locomotives or rail coaches, the traction transformer is a crucial piece in the traction chain. If the traction transformer fails, the train is immobilised, passengers are inconvenienced and a track section is blocked. As the considerable weight and volume of the traction transformer does not allow for redundancy, particular care has to be taken in view of its reliability. In order to prevent any kind of failure, timely repair or replacement of components, or an immediate adjustment of operating conditions such as an increase of the cooling effort or a reduction of the load may be required.

Except for certain locomotives, the traction transformer is usually placed outside the main casing of the traction vehicle, i.e. underfloor or on the roof top. Assuming one cable for each of the various monitoring tools for control and protection, their connection requires a considerable amount of work. Furthermore the length of the various cables from the traction transformer to some central control unit in the vehicle may easily reach several tens of meters.

By way of example, the European Patent Application EP-A 1 085 635 discloses an intelligent monitoring and analysis system for fluid-filled electrical equipment such as transformers. The coils of the transformer are encapsulated in a containment vessel and immersed in a liquid, usually oil, for cooling and electrical insulation purposes. Various operating parameters of the transformer or the fluid respectively are monitored by means of sensors measuring or detecting e.g. a fluid temperature, a gas content or a filling level of the fluid inside the containment vessel, an electrical load, i.e. the power applied to the transformer, or an ambient temperature. Among the gases to be detected are hydrogen or hydrocarbons which increase in concentration due to hot spots caused by circulating currents and dielectric breakdown. All gases detected are generated by and thus allow to identify various known faults such as degradation of insulation material, turn-to-turn shorts in the coils, overloading, loose connections or the like. A diagnostic device comprising a processor with a CPU and a memory device is coupled to the sensors which in turn provide signals indicative of plural operating parameters. Certain parameters are regularly calculated via analytical models taking into account the physical characteristics of the equipment, and then compared to measured values. If all possible failure modes are identifiable, a causal network can be established and the causes of any problem occurring may be identified unambiguously. The system includes a user interface with a display and a keyboard for interaction with an operator.

The Patent Application WO 02/48718 describes a further protection system arranged to monitor the operation of an inductive power device and to perform control actions when operation exceeds certain safety operation thresholds, e.g. when the temperature of a cooling fluid increases too much. A heat status of the inductive power device is evaluated and malfunctions may be detected at an early stage. The heat status is determined via a heat inflow generated by the power windings and a heat outflow provided by the cooling capacity of the cooling means. An actual heat content is compared to a previous heat content plus a calculated expected change in heat content, and any discrepancy in the heat balance is notified to an operator.

At the latest InnoTrans trade show (24.-27.9.2002 in Berlin, Germany), a traction transformer was shown by the present applicant, which transformer included an interface unit with a controller interface to a fieldbus based on a standard bus protocol like MVB or CAN. Furthermore, sensor interfaces were provided and connected to various sensors, thus enabling a continuous remote reading from a simulated drivers cab of the operating parameters measured by said sensors. However, the model system exhibited did neither allow to exploit the measured signals nor to extract useful monitoring data therefrom.

### DESCRIPTION OF THE INVENTION

It is therefore an objective of the invention to increase the reliability, efficiency and lifetime of a traction transformer of the type mentioned initially by providing a means for monitoring an operating status of the traction transformer without excessively occupying a train control system by transmitting individual operating parameter readings. It is a further objective of the invention to reduce the workload for the manufacturer of a railway propulsion vehicle both during the engineering phase and in the assembling process.

These objectives are achieved by a traction transformer and a method for monitoring an operating status of a traction transformer according to the claims 1 and 6. Further preferred embodiments are evident from the dependent patent claims.

According to the invention, an interface unit as part of the traction transformer, i.e. adjacent to or even integrated in the containment vessel of the transformer, is equipped with a processor means being connected to sensors which in turn measure operating parameters of the traction transformer. Processes for monitoring operating conditions of the traction transformer are carried out locally by the processor means, and data is transmitted over the train control system only upon request or in case of an emergency, i.e. if the operating status is outside a safe operation range. In other words, a decentralized intelligence dedicated and located close to the traction transformer is provided, thereby minimizing the data exchange between the latter and the train control system by assigning various monitoring and controlling tasks to the abovementioned processor means.

In a preferred variant of the invention, the processor means comprise a memory for recording the measured values of the operating parameters, either regularly or at least upon drastic changes, in order to allow for a post-lifetime analysis of the operating conditions of the particular traction transformer.

In a further preferred variant of the invention, the monitoring processes comprise a diagnostic step for evaluating a present operating status of the transformer, taking into account the measured values of the operating parameters. Further, the evolution of the operating status in the near future can be estimated, preferably based on an extrapolation of the measured parameter values and/or a mechanical load forecast based e.g. on a stored altitude profile of track ahead.

The operating parameters which are to be measured by means of the various sensors are preferably, but not limited to, the electrical power or load of the transformer (which necessitates a current and voltage measurement in one of the bushings), the temperature of the cooling fluid at various positions in the containment vessel (at least a top and bottom position, the temperature distribution being inhomogeneous in most cases), a fluid or oil level in the vessel, an ambient temperature, a gas/hydrogen content in the fluid, a moisture/humidity content in the fluid, a power of the cooling means (e.g. speed of the cooling fan).

### BRIEF DESCRIPTION OF THE DRAWINGS

The subject matter of the invention will be explained in more detail in the following text with reference to preferred exemplary embodiments which are illustrated in the attached schematical drawings, in which:
- Fig. 1: shows a traction vehicle with a traction transformer including an interface unit, and
- Fig.2: depicts various components of the interface unit.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

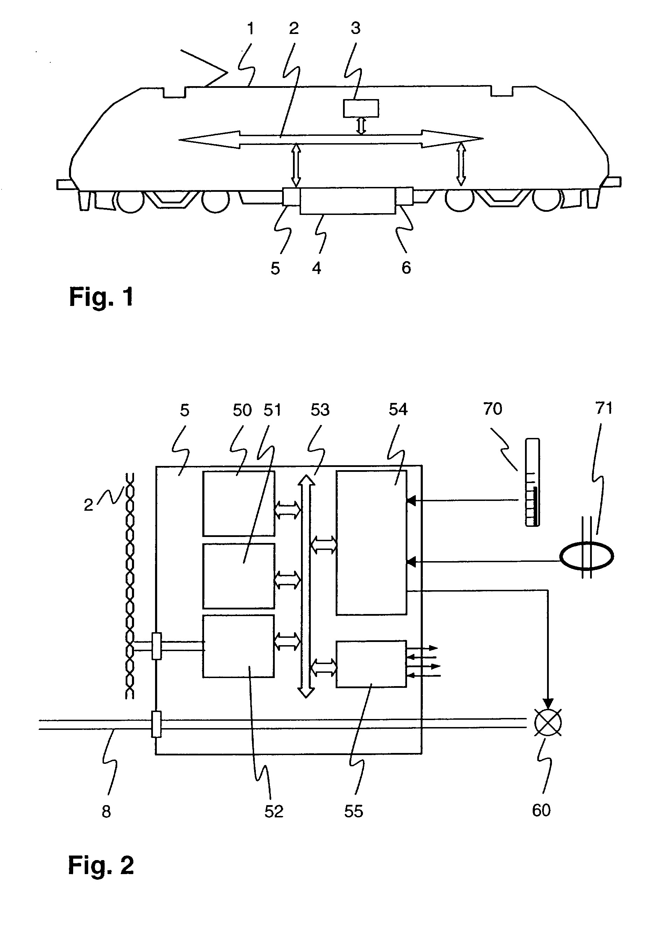

Fig. 1 shows a traction vehicle 1 equipped with a fieldbus 2 linking various devices controlling e.g. the operation of drives or brakes, as well as the drivers cab, with a train control system 3. A traction transformer 4 is attached underneath the floor of the vehicle casing and comprises a core and several windings immersed in a cooling/insulating liquid contained in a containment vessel (not shown). Cooling means 6 are shown next to the traction transformer 4 in Fig.1 but are generally considered to form a separate component, exchangeable independently from the traction transformer 4. The latter is further provided with an interface unit 5 which is linked to the fieldbus 2.

Fig.2 depicts the details of the interface unit 5. A bus controller, gateway or controller interface 52 such as a RS-232 interface manages the data flow from the interface unit 5 to the fieldbus 2. Processor means 50 and memory means 51 are linked via an internal bus 53 to the controller interface 52 and to a local sensor interface module 54. The latter serves as Input/Output facility and is connected, by way of example, to a digital temperature sensor 70 for measuring a temperature (T_{liq}) of the cooling liquid, an analogue current sensor 71 for determining the electrical power (Pₑₗ) of the transformer, and a main switch of a motor of a cooling fan 60. Additional interface modules 55 of various types (e.g. optical, GSM) and at various locations (e.g. external to the housing of the interface unit) may expand the functionality of the interface unit 5.

As the heating of the transformer 4 due to the currents in the windings and the core generally exceeds the heat dissipation capability through the walls of the containment vessel, cooling means 6 are provided in order to prevent damage to the immersed transformer and associated equipment. Generally, the cooling means 6 comprise one or two pumps for circulating the cooling fluid through a heat exchanger including cooling fins and one or several fans 60 for blowing ambient air through the heat exchanger. A single power supply cable 8 is connected to the interface unit 5 and supplies power both to the electronic devices 50,52,52,54, and the motors of the pumps and fans 60.

The sensors 70,71 depicted in the drawings are only two examples from a multitude of sensors or detectors which measure operating parameters or detect certain events. Other examples are: a voltage/current sensor measuring the power transformed, thermometers for measuring the temperature of the cooling fluid at different locations, a further thermometer for measuring the ambient temperature, an accelerometer for shock or vibration detection, a gas detector/analyzer for detecting and analysing gases that are formed inside the containment vessel, a heat exchanger status indicator for indicating the degree of contamination of the heat exchanger, a cooling fan or cooling pump motor speed detector for determination of the actual operating conditions such as the throughput of a cooling pump or the turns per minute of a cooling fan. The latter is particularly advantageous because the actual operation of the fan may be obstructed or blocked with leaves or similar loose objects. Reduced cooling effects due to obstruction of the fan or contamination of the heat exchanger may thus be taken into consideration while monitoring an operating status of the traction transformer.

The recording of the operation parameter values in a permanent memory may comprise readings at regularly spaced intervals or be limited to maximum, minimum or average values. In order to further save memory resources, the recording outside of the actual operation times of the transformer may be restricted to e.g. the ambient temperature. Of course, numerous other events such as engine starts/shut downs, pantograph-overhead line connections/disconnections, numbers of shocks due to docking manoeuvres, operating hours and transformer power can be stored. The recorded values are helpful for a calculation of the transformer ageing, a post-mortem analysis of the transformer or the scheduling of maintenance actions after a certain operating time. To that purpose, the stored data may be further transmitted to an independent centralized maintenance planning server, preferably by GSM and completed by an indication of the present vehicle location.

Part of the basic characteristics of the processor means 50 according to the invention is the ability to continuously monitor the proper functioning of the sensors connected. Further, the control of the cooling means 6 in view of an optimum global efficiency is the single most important task of the processor means and consists in a regulation of the oil flow via the pump and the speed of a single fan or the number of fans in operation. The cooling power is adapted in response to the Joule heat generated by the transformer, and takes into consideration an operating status of the traction transformer which in turn is based on measured, extrapolated, calculated or otherwise provided operating parameters.

Based on analytical models as e.g. disclosed in the aforementioned patent applications, the diagnostic means of the processor may primarily calculate a momentary or present overall operating status indicating "safe operation" or "risk of overload" or issuing an "overload fault". Said analytical models take into account the various operating parameters as well as transformer specific, unchanging information such as material properties and geometric dimensions in order to deduce e.g. potential chemical reactions or local electric fields. If a hot spot, i.e. an inacceptable rise in temperature at a certain location in the transformer, has been predicted, the cooling means 6 are regulated to full power in order to prevent the hot spot from forming and doing damage to the equipment.

In addition, based on the momentary operating status, future safe operating conditions, including e.g. constraints on speed or weight of the train or restrictions regarding temporary overloading capabilities of the transformer, are deduced. To that purpose, the measured operating parameter values are extrapolated and/or refined with further external data such as the weather forecast. If a mechanical load forecast or anticipation is possible through the knowledge of the altitude profile of the track ahead, additional constraints generally based on the steepest or longest climbing sections can be derived, resulting in preventive actions such as an increase in cooling power, or a request for load reduction or an acceptance of load increase, to be reported to the train control system. Another predictable event might be a stop in a passenger station which requires the cooling ventilators to be stopped in order to reduce the noise annoyance for both the waiting and on-board passengers.

Only two cables lead to a traction transformer according to the invention, a first one, representing the onboard fieldbus, for communication with the train control system, and the second one for power supply purposes. The communication link (2) is either a standard twisted pair or coaxial copper cable, or an optical fibre, or could even be replaced altogether by a wireless link or any other future standard. The unique power supply cable (8) will have to be chosen as a function of the power to be delivered, e.g. the number of cooling motors to be supplied, which in turn depends on the size of the traction transformer. The power supply cable in general comprises several individual conductors and a standard multi-pin connector admitted for railway purposes. By way of example, a 400 V AC three-phase supply for the pumps and fans and a 24 V DC supply for the electronic devices represent a basic configuration. According to the requirements of the intended operator of the traction vehicle, other options such as a further DC supply for a heating element in the interface unit may be added.

In a traction vehicle equipped with a traction transformer being adapted to be connected to the train control system, the number of cables is significantly reduced. If the transformer is arranged outside of the casing of the traction vehicle, space is gained inside the vehicle as the sensor interfaces or I/O-units are placed next to the transformer. Furthermore, the mounting and connection process is rendered easier, as only the remaining two cables have to be plugged, independently of the number and type of sensors installed. The main advantage however resides in the fact that all checks prior to operation can be done on the site of the transformer manufacturer, i.e. the proper working of the different sensors including the interface processes can be verified on the detached transformer. The latter thus comes as a fully pre-tested piece of equipment ready to be put into action.

### LIST OF DESIGNATIONS

- 1: traction vehicle
- 2: fieldbus
- 3: train control system
- 4: traction transformer
- 5: interface unit
- 50: processor means
- 51: memory means
- 52: controller interface
- 53: internal bus
- 54: sensor interface module
- 55: additional interface module
- 6: cooling means
- 60: cooling fan
- 70: temperature sensor
- 71: current sensor
- 8: power supply cable

## Claims

1. A traction transformer (4) for railway vehicles comprising a transformer coil in a containment vessel filled with a liquid, at least one sensor (70, 71) for measuring at least one operating parameter (T_{liq}, Pₑₗ) of the traction transformer (4), and an interface unit (5) with a controller interface (52) for communication with a train control system (3) and a sensor interface module (54) connected to the at least one sensor (70, 71),
**characterized in that** the interface unit (5) further comprises a processor means (50) for monitoring an operating status of the traction transformer (4) based on the at least one operating parameter (T_{liq}, Pₑₗ).

2. The traction transformer according to claim 1, **characterized in that** the interface unit (5) comprises a memory means (51) for recording values of the at least one operating parameter (T_{liq}, Pₑₗ).

3. The traction transformer according to claim 1, **characterized in that** the processor means (50) comprises diagnostic means for analysing a present operating status or prognostic means for predicting a future operating status of the traction transformer (4).

4. The traction transformer according to claim 1, **characterized in that** the at least one operating parameter is one of the following: temperature of the liquid (T_{liq}) in the containment vessel, electrical power of the transformer (Pₑₗ), ambient temperature, level of the liquid, gas content in the liquid, moisture content in the liquid, efficiency of a cooling means (6) for cooling the liquid.

5. The traction transformer according to claim 1, **characterized in that** the interface unit (5) is adapted to be connected to a single power supply cable (8).

6. A method for monitoring an operating status of a traction transformer (4) comprising a transformer coil in a containment vessel filled with a liquid, at least one sensor (70, 71) for measuring at least one operating parameter (T_{liq}, Pₑₗ) of the traction transformer (4) and an interface unit (5) with a controller interface (50) for communication with a train control system (3) and a sensor interface module (54) connected to the at least one sensor (70, 71),
**characterized in that** values of the at least one (T_{liq}, Pₑₗ) operating parameter of the traction transformer (4) are measured by the at least one sensor (70, 71) and fed to a processor means (50) comprised in the interface unit (5), and **in that** the operating status is monitored by the processor means (50).

7. The method according to claim 6, **characterized in that** a future operating status of the traction transformer (4) is predicted by the processor means (50) and based on a load forecast.

8. The method according to claim 6 or 7, **characterized in that** a cooling means (6) is controlled in response to an operating status of the transformer (4).
